# EUROPEAN PATENT APPLICATION

(11) **EP 3 547 095 A1**
(43) Date of publication of application: **02.10.2019**
(21) Application number: 17873471.1
(22) Date of filing: 14.11.2017
(51) Int. Cl.: G06F 3/0481, G06F 3/0486, G06F 3/0488

(54) **INFORMATION PROCESSING APPARATUS AND METHOD, AND PROGRAM**

(30) Priority: 28.11.2016 JP 2016229739
(71) Applicant: Sony Corporation, Tokyo 108-0075 (JP)
(72) Inventor: KANDA Kazuto, Tokyo 108-0075 (JP)
(74) Representative: D Young & Co LLP
(86) International application number: PCT/JP2017/040977
(87) International publication number: WO 2018/096987

(57) **Abstract**

The present disclosure relates to an information processing apparatus, method, and program capable of operating a display unit different from a display unit to be operated.

A touch panel display that is the display unit to be operated is provided at the hand of a teacher, and a screen that is a display unit not to be operated is provided in a front part of a classroom. The teacher conducts class by using content displayed on the touch panel display as necessary. The teacher moves the content on the touch panel display to a predetermined region within a display range as necessary. When detecting content moved to the predetermined region, a device calculates a display position of the content on a screen. The present disclosure is applicable, for example, to an education system including the touch panel display provided at the hand of the teacher and the screen provided in the front part of the classroom.

## Description

### TECHNICAL FIELD

The present disclosure relates to an information processing apparatus, method, and program, and more particularly, to an information processing apparatus, method, and program capable of operating a display unit different from a display unit to be operated.

### BACKGROUND ART

A technology has been known for selecting content from a list of contents, that operate on a device having a plurality of display units, to be display candidates and displaying the content in a frame for display.

For example, in a case where this is controlled by using a device such as a touch panel of which an operable region is limited, if the list of the contents to be display candidates and in the frame for display are displayed on the same display unit, it is possible to select a certain content from the list of the contents by dragging and dropping the content to be selected and display the content in the frame for display.

### CITATION LIST

### PATENT DOCUMENT

Patent Document 1: Japanese Patent Application Laid-Open No. 2015-55913

### SUMMARY OF THE INVENTION

### PROBLEMS TO BE SOLVED BY THE INVENTION

However, it is difficult to drag content in a list of contents displayed on a display unit 1 to another display unit 2, and with this method, it has been difficult to change the content displayed in the frame for display.

Note that, regarding the technology described in Patent Document 1, it is described that two display units have and share an overlapped region, and an icon and the like is moved to the overlapped region so as to transfer data associated with the icon. However, it is difficult to apply this technology to a case where there is no overlapped region on the display units.

The present disclosure has been made in view of such a situation, and the present disclosure can operate a display unit different from a display unit to be operated.

### SOLUTIONS TO PROBLEMS

An information processing apparatus according to one aspect of the present technology includes a detection unit that detects a movement of a thumbnail indicating display target information to a predetermined region in a first display unit on the first display unit to be operated and a display position calculation unit that calculates a display position of the display target information on any one of the first display unit or a second display unit that is not operated according to the predetermined region where the movement has been detected by the detection unit.

In a case where the movement of the thumbnail has been detected on a first predetermined region by the detection unit, the display position calculation unit can calculate a display position of the display target information on the first display unit, and in a case where the movement of the thumbnail has been detected on a second predetermined region by the detection unit, the display position calculation unit can calculate a display position of the display target information on the second display unit.

The detection unit can detect the movement of the thumbnail according to a contact operation relative to the first display unit by using a pointing device.

The detection unit can detect the movement of the thumbnail according to a non-contact operation.

A display controller that makes the first display unit display a frame surrounding the second predetermined region can be further included.

The detection unit can detect a movement of the thumbnail made by dragging and dropping.

In a case where the detection unit has detected start of dragging, the display controller can display the frame, and in a case where the detection unit has detected dropping, the display controller can prohibit the display of the frame.

In a case where the movement of the thumbnail has been detected around a second predetermined region by the detection unit, the display controller can display the frame, and in a case where the movement of the thumbnail has been detected outside the second predetermined region by the detection unit, the display controller can prohibit the display of the frame.

The display controller can arrange the second predetermined region on the first display unit.

The display controller can arrange the second predetermined region according to physical arrangement of the second display unit.

The display controller can control display of a list of the thumbnails and can arrange the second predetermined region near the arrangement of the thumbnail selected from the list.

The display controller can display the second predetermined region as an icon according to the number of second display units.

In a case where proximity of the thumbnail has been detected near the icon by the detection unit, the display controller can display a frame at a position surrounding the second predetermined region.

The display controller can control display of the list of the thumbnails and can display a mark displayed on the second display unit where the display target information is displayed at least one of the second predetermined region corresponding to the second display unit or in vicinity of the thumbnail in the list indicating the display target information.

The display target information is content or a content control application.

In a case where the display target information is the content control application, the display controller can make the first display unit display a screen of the content control application.

The second display unit can be arranged at a place away from the first display unit.

The information processing apparatus is used for medical use, educational use, or conference use.

An information processing method according to one aspect of the present technology performed by an information processing apparatus, the method includes detecting a movement of a thumbnail indicating display target information to a predetermined region in a first display unit on the first display unit to be operated and calculating a display position of the display target information on any one of the first display unit or a second display unit that is not operated according to the predetermined region where the movement has been detected.

A program according to one aspect of the present technology causes a computer to function as a detection unit that detects a movement of a thumbnail indicating display target information to a predetermined region in a first display unit on the first display unit to be operated and a display position calculation unit that calculates a display position of the display target information on any one of the first display unit or a second display unit that is not operated according to the predetermined region where the movement has been detected by the detection unit.

In one aspect of the present technology, on the first display unit to be operated, the movement of the thumbnail indicating the display target information to a predetermined region in the first display unit is detected. Then, according to the predetermined region where the movement has been detected, a display position of the display target information in one of the first display unit or the second display unit that is not operated is calculated.

### EFFECTS OF THE INVENTION

According to the present technology, an operation with respect to a display unit different from a display unit to be operated can be performed.

Note that the effects described herein are only exemplary, and the effects of the present technology are not limited to those described herein, and additional effects may be obtained.

### BRIEF DESCRIPTION OF DRAWINGS

Fig. 1 is a diagram of an example of a user interface displayed on a display unit by a program to which the present technology is applied.
Fig. 2 is a block diagram of an exemplary configuration of hardware of a computer executed by the program in Fig. 1.
Fig. 3 is a functional block diagram of a computer to which the present technology is applied.
Fig. 4 is a diagram of another example of the user interface in Fig. 1.
Fig. 5 is a diagram of still another example of the user interface in Fig. 1.
Fig. 6 is a diagram of yet another example of the user interface in Fig. 1.
Fig. 7 is a diagram of a specific example of a case where the present technology is applied.
Fig. 8 is a diagram for explaining an exemplary operation in a case where the present technology is applied.
Fig. 9 is a diagram of another example of the user interface in Fig. 1.
Fig. 10 is a diagram of still another example of the user interface in Fig. 1.
Fig. 11 is a flowchart for explaining display control processing.
Fig. 12 is a flowchart for explaining display control processing.
Fig. 13 is a diagram of an outline of a classroom where a lecture is conducted.
Fig. 14 is a diagram of an outline of a classroom where an active-learning-lecture is conducted.
Fig. 15 is a diagram of an exemplary display of an operation screen on a centralized operation panel provided in an operating room.
Fig. 16 is a schematic diagram of an overall configuration of an operating room system.
Fig. 17 is a diagram of an exemplary display of an operation screen on a centralized operation panel.
Fig. 18 is a diagram of an example of a state of surgery to which the operating room system is applied.
Fig. 19 is a block diagram of an exemplary functional configuration of a camera head and a CCU illustrated in Fig. 18.

### MODE FOR CARRYING OUT THE INVENTION

Embodiments for carrying out the present disclosure (referred to as embodiment below) will be described below. Note that, the description will be made in the following order.
1. First Embodiment
2. Second Embodiment (System Example)
3. Application Example
4. Summary

### <1. First Embodiment>

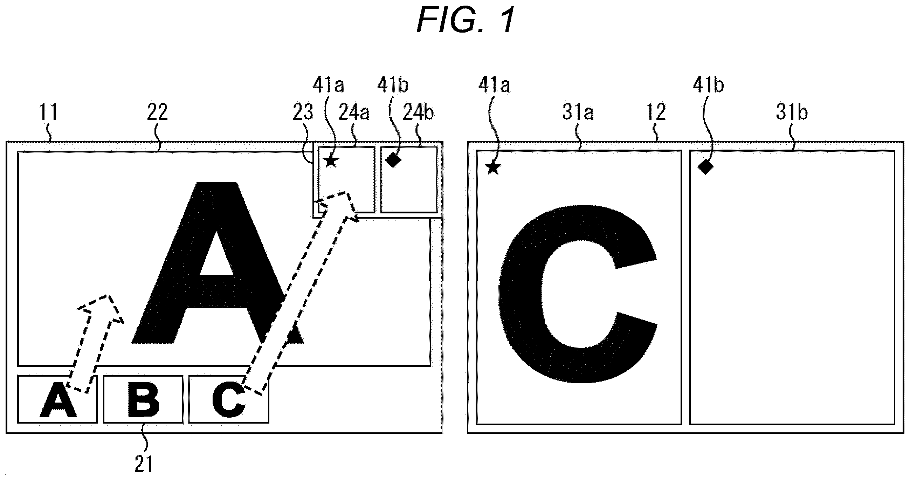

Fig. 1 is a diagram of an example of a user interface displayed on a display unit by a program to which the present technology is applied.

In the program, a thumbnail of a desired content (for example, content A) is selected from a list 21 of contents, in which thumbnails of contents such as video are aligned, displayed on a main display unit 11 that is a display unit to be operated and the selected thumbnail is dragged and dropped on an enlarged display unit 22 so that the target content (for example, content A) is enlarged and displayed.

Furthermore, in the program, the display unit to be controlled is not limited to one of the main display units 11, and the program in Fig. 1 can control two or more display units such as sub display units 12 that are display units which are not operation targets. The sub display unit 12 includes two enlarged display units, i.e., enlarged display units 31a and 31b. In other words, each display unit can include one or both of the list of the contents and the enlarged display units.

Moreover, as the characteristics of the present technology, frames 23 corresponding to the sub display units 12 are displayed on the main display unit 11, and in the frames 23, small frames 24a and 24b corresponding to the enlarged display units 31a and 31b displayed on the sub display unit 12 are respectively displayed.

It is regarded that the contents are dragged and dropped on the enlarged display units 31a and 31b of the sub display unit 12 by dragging and dropping thumbnails of contents in the small frames 24a and 24b on the main display unit 11, and the contents are respectively displayed on the corresponding enlarged display units 31a and 31b. For example, by selecting a thumbnail of content B and dragging and dropping the selected thumbnail on the small frame 24a, the content B is enlarged and displayed on the enlarged display unit 31a of the sub display unit 12.

Note that, in order to recognize a correspondence between the small frames 24a and 24b of the main display unit 11 and the enlarged display units 31a and 31b of the sub display unit 12, a star mark 41a is displayed on the upper left side of each of the small frame 24a and the enlarged display unit 31a, and a diamond mark 41b is displayed on the upper left side of each of the frame 24b and the enlarged display unit 31b.

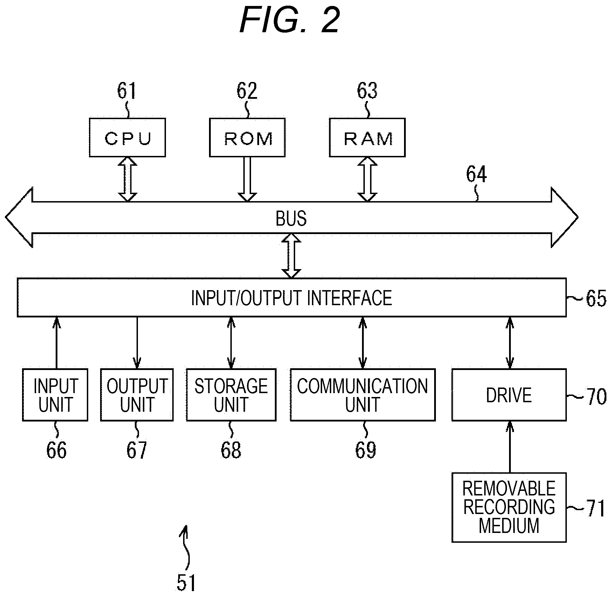

Fig. 2 is a block diagram of an exemplary configuration of hardware of a computer executed by the program in Fig. 1.

In a computer 51, a Central Processing Unit (CPU) 61, a Read Only Memory (ROM) 62, and a Random Access Memory (RAM) 63 are connected to each other with a bus 64.

In addition, an input/output interface 65 is connected to the bus 64. An input unit 66, an output unit 67, a storage unit 68, a communication unit 69, and a drive 70 are connected to the input/output interface 65.

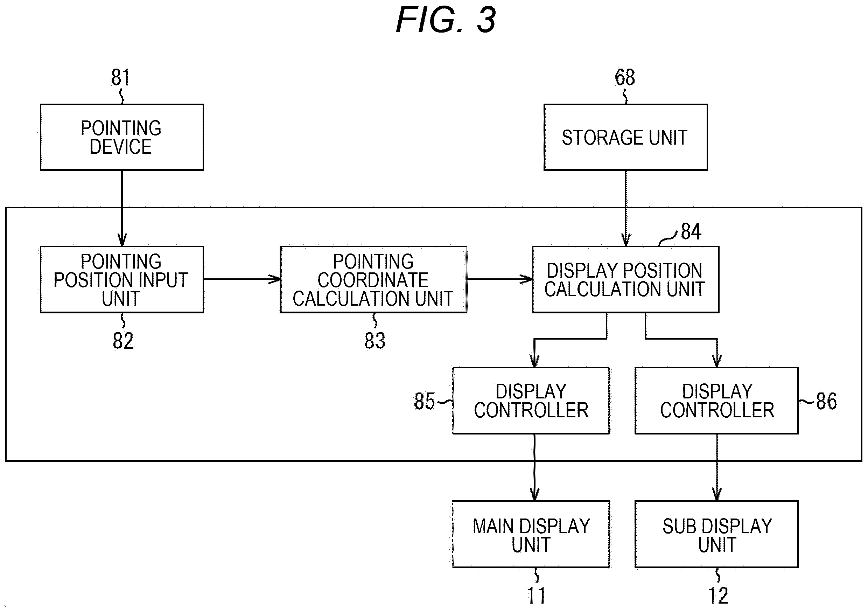

The input unit 66 includes, for example, a keyboard, a microphone, and a pointing device 81 (Fig. 3) such as a mouse, a touch panel, or a tablet. The output unit 67 includes the display units (main display unit 11 and sub display unit 12), a speaker, and the like. The storage unit 68 includes a hard disk, a non-volatile memory, and the like. The communication unit 69 includes a network interface and the like. The drive 70 drives a removable recording medium 71 such as a magnetic disk, an optical disk, an optical magnetic disk, or a semiconductor memory.

In the computer 51 configured as above, the CPU 61 loads, for example, a program stored in the storage unit 68 to the RAM 63 via the input/output interface 65 and the bus 64 and executes the program. With this operation, functional blocks in Fig. 3 to be described next function, and the above-described series of processing is performed.

Fig. 3 is a functional block diagram of a computer to which the present technology is applied.

In an example in Fig. 3, the pointing device 81, a pointing position input unit 82, a pointing coordinate calculation unit 83, a display position calculation unit 84, display controllers 85 and 86, the storage unit 68, the main display unit 11, and the sub display unit 12 are illustrated.

A user drags and drops the thumbnail of the content by using an arbitrary pointing device 81. The pointing device 81 may be a contact-type device or a non-contact type device. The pointing position input unit 82 receives a position input from the pointing device 81. At this time, the pointing position input unit 82 determines whether or not an input operation is dragging of the thumbnail of the content and start or end of the dragging of the thumbnail of the content. The pointing coordinate calculation unit 83 calculates coordinates from the position input received by the pointing position input unit 82 and detects movement of the thumbnail of the content to the frame and the enlarged display unit (in other words, predetermined region) by using the calculated coordinate information.

The display position calculation unit 84 detects the movement of the thumbnail of the content to the frame and the enlarged display unit (in other words, predetermined region) by using the pointing device 81 in accordance with a predetermined region calculated from the coordinate information from the pointing coordinate calculation unit 83 so as to determine the enlarged display unit (enlarged display units 22, 31a, or 31b) that displays the content and to calculate a display position of the content stored in the storage unit 68. The display controller 85 controls display on the main display unit 11. In other words, the display controller 85 makes the main display unit 11 display content, a frame, a small frame, a thumbnail, an icon, and the like on the basis of display position information from the display position calculation unit 84, or the like. The display controller 86 controls display on the sub display unit 12. In other words, the display controller 86 makes the sub display unit 12 display the content on the basis of the display position information from the display position calculation unit 84 and the like.

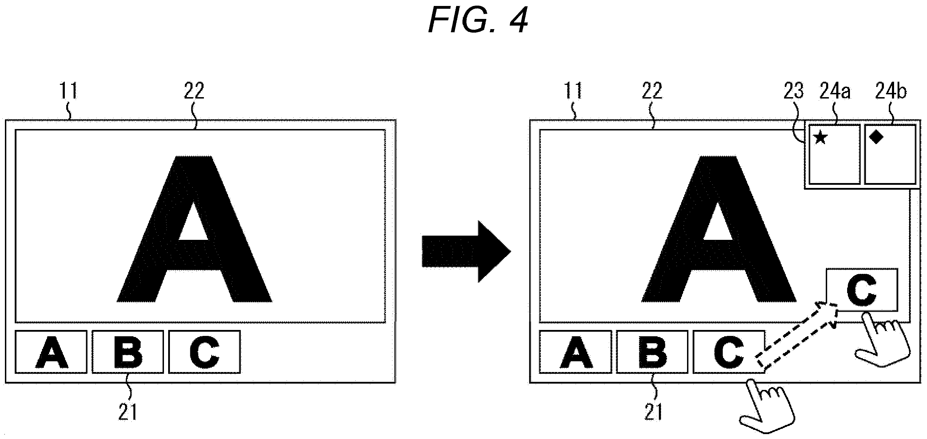

Fig. 4 is a diagram of another example of the user interface in Fig. 1. In the example in Fig. 4, an example in which the frame 23 is displayed and is not displayed is illustrated.

In the main display unit 11 of the example in Fig. 4, the frame 23 including the small frames 24a and 24b is not displayed first. In a case where a thumbnail of a certain content is dragged from the list 21 of the content as indicated by a front end of a black arrow, the frame 23 is displayed. Thereafter, when the drag operation is completed, the frame 23 is not displayed again.

As described above, display or non-display of the frame 23 may be switched as necessary.

Note that display or non-display of the frame 23 is not limited to a case of the example in Fig. 4. For example, the frame 23 may be displayed by arranging a button on the main display unit 11 and pressing the button. Furthermore, a case is considered in which the thumbnail of the content is displayed by overlapping the thumbnail on an icon and the like arranged on the main display unit 11 when the thumbnail is dragged and is separated from the frame 23 so as not to display the frame 23. However, the present technology is not limited to this.

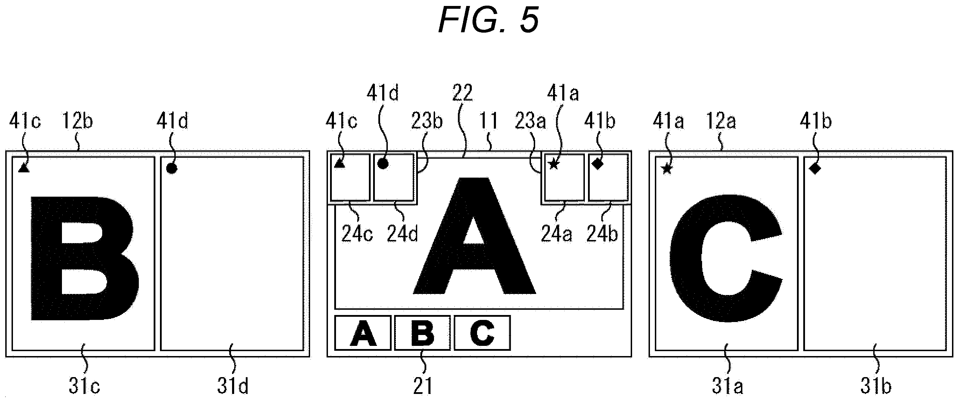

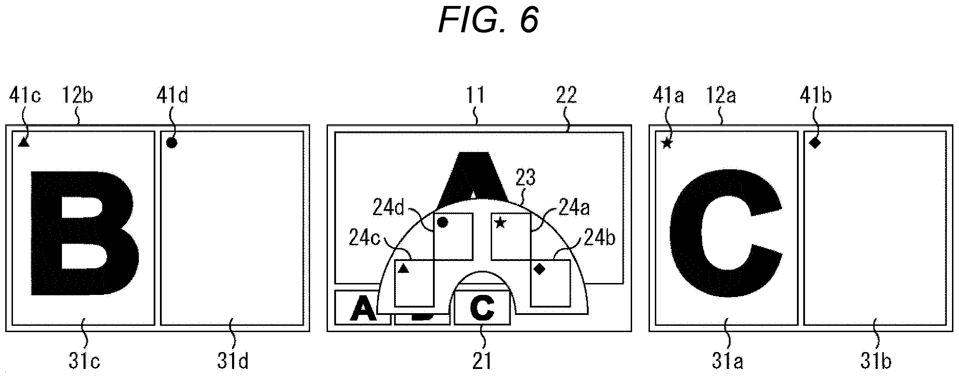

Figs. 5 and 6 are diagrams of still another examples of the user interface in Fig. 1. In the examples in Figs. 5 and 6, an example is illustrated in which two sub display units 12 (sub display units 12a and 12b) are provided with respect to the main display unit 11.

The sub display unit 12a is arranged on the right side of the main display unit 11, and the sub display unit 12b is arranged on the left side. In this case, it is considered that the frame 23 is positioned in the main display unit 11 according to a physical positions of each of the sub display units 12a and 12b. In other words, as illustrated in Fig. 5, a frame 23a corresponding to the sub display unit 12a is arranged near the right end of the main display unit 11, and a frame 23b corresponding to the sub display unit 12b is arranged near the left end of the main display unit 11.

Alternatively, as illustrated in Fig. 6, for easy dragging and dropping, the frame 23 may be arranged to surround a thumbnail of a target content near the thumbnail of the target content (in this case, content C) in the list 21 of the contents. The present technology is not limited to this, and the frame 23 may be positioned at an arbitrary position and may have an arbitrary shape.

Note that, as illustrated in Fig. 5, the number of sub display units 12 is not limited to one, and more sub display units 12 may be included. In this case, the frames 23 corresponding to the respective sub display units 12 as many as the sub display units 12 may be displayed on the main display unit 11.

Furthermore, in a case where there are extremely large number of sub display units 12, a large number of frames 23 are displayed on the main display unit 11. However, for example, a method is considered for displaying the larger frame 23 by an operation for displaying the frame in a shape of a small icon and overlapping or moving closer the dragged content to the frame 23, having contact with the icon during dragging, or the like.

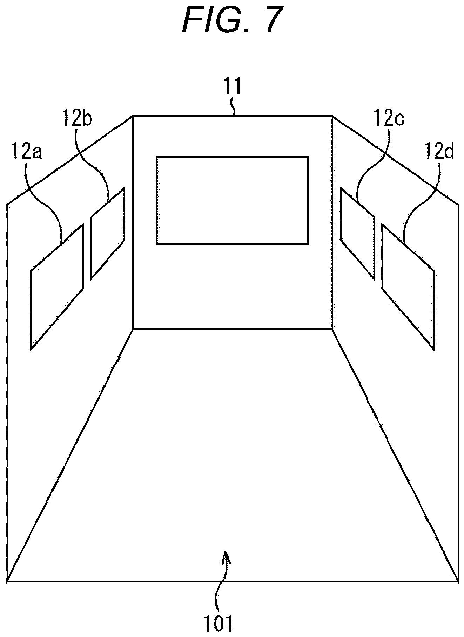

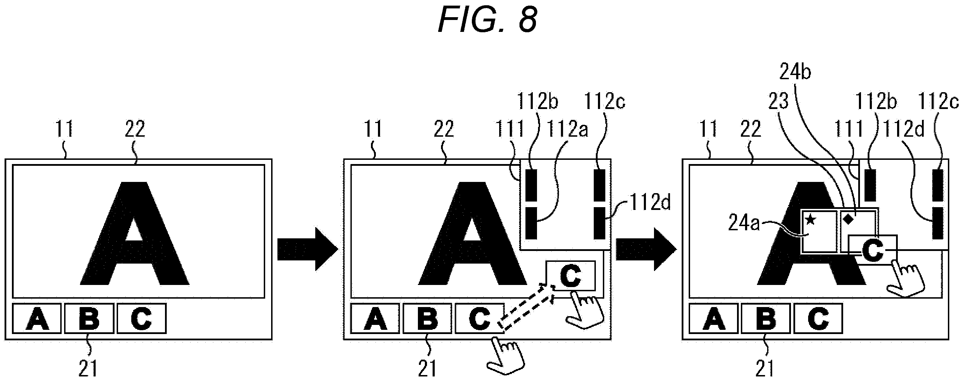

More specific examples will be described with reference to Figs. 7 and 8.

In the example in Fig. 7, an example is illustrated in which the main display unit 11 and sub display units 12a to 12d are arranged on a wall of a room 101. In the example in Fig. 8, an exemplary operation in a case where the present technology is applied to the room 101 is illustrated.

When dragging of the thumbnail of the content C is started, as illustrated in Fig. 8, a frame 111 is displayed. In the frame 111, icons 112a to 112d respectively corresponding to the sub display units 12a to 12d are displayed. Note that, hereinafter, in a case where it is not necessary to distinguish the sub display units 12a to 12d from each other, the sub display units 12a to 12d are referred to as a sub display unit 12. Similarly, in a case where it is not necessary to distinguish the icons 112a to 112d from each other, the icons 112a to 112d are referred to as an icon 112.

The icon 112 is arranged as corresponding to the physical position of the sub display unit 12. By overlapping the thumbnail of the content being dragged with the icon 112, the frame 23 corresponding to the sub display unit 12 corresponding to the icon 112 is displayed. A display method of the frame 23, a shape and a display method of the icon 112 corresponding to the frame 23, and the like are not limited to these.

The number and arrangement of small frames 24 for content drop (small frames 24a and 24b) in the frame 23 are arbitrary. It is considered to arrange the small frames 24 as many as the enlarged display units 31 (enlarged display units 31a and 31b) displayed on the sub display unit 12 corresponding to the frame 23. However, the present technology is not limited to this. In a case where an extremely large number of enlarged display units 31 exist, a large number of small frames 24 are displayed in the frame 23. In this case, the size of the frame 23 is adjusted in accordance with the number of small frames 24. For example, a method for displaying only a part of the small frame 24 and scrolling the display is considered. Furthermore, in a case where the display is scrolled, for example, a method for preparing a region where scrolling is performed when the dragged thumbnail of the content is overlapped with the region is considered. However, the method is not limited to these methods.

An arbitrary display can be made in the small frame 24. A mark 41 (star mark 41a, diamond mark 41b, triangle mark 41c, and circle mark 41d) displayed in the enlarged display unit 31 in the sub display unit 12 is displayed respectively in the small frame 24 to clearly indicate the correspondence. In this case, each mark can be displayed only in a case where the frame 23 is displayed. Note that, not only marks but also symbols, numbers, character strings, and the like may be used to clearly indicate the correspondence. Furthermore, a method for displaying the displayed content in each enlarged display unit 31 is considered. However, the method is not limited to this.

The sub display unit 12 may be provided away from the main display unit 11. The place may be a remote location connected via the Internet. In this case, for example, the sub display unit 12 and the display controller 86 for the sub display unit 12 (information processing apparatus including the display controller 86) are arranged away from the main display unit 11, and the display position information from the display position calculation unit 84 and the content are transmitted to the information processing apparatus for the sub display unit 12 via a network, and the display controller 86 controls the display of the content on the basis of the display position information from the display position calculation unit 84. Note that the content may be stored in the information processing apparatus for the sub display unit 12 in advance.

Roles of the main display unit 11 and the sub display unit 12 may be appropriately switched as necessary. In other words, all the display units may have a function equal to the main display unit 11.

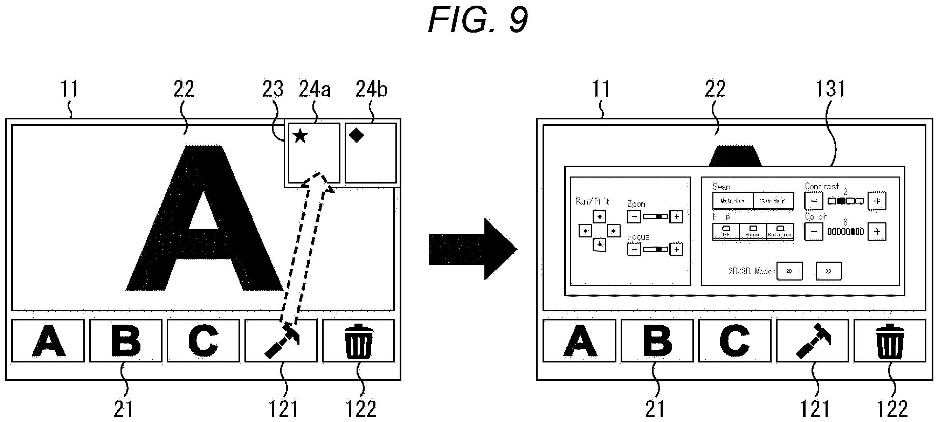

The content displayed on the enlarged display unit 31 may be controlled according to an operation relative to the small frame 24, or the display may be terminated. For example, as illustrated in Fig. 9, not only the thumbnail of the content but also a thumbnail of an application of content may be arranged in the list 21 of the contents. In a case of an example in Fig. 9, an icon for content control (in other words, thumbnail of application for content control) 121 is arranged and dragged and dropped in the small frame 24 so as to display a panel for content control 131 which is displayed on the corresponding enlarged display unit 31 on the main display unit 11. In other words, the application for content control is activated.

Furthermore, by dragging and dropping an icon for terminating content display (in other words, thumbnail of application for terminating content display) 122 on the small frame 24, the application for terminating the content display is activated, and display of content which is displayed on the corresponding enlarged display unit 31 is terminated.

Note that, in addition, for example, a method for controlling the content which is displayed in the corresponding enlarged display unit 105 or terminating the display of the content by pressing a button and the like arranged in the small frame 24 is considered. However, the method is not limited to this.

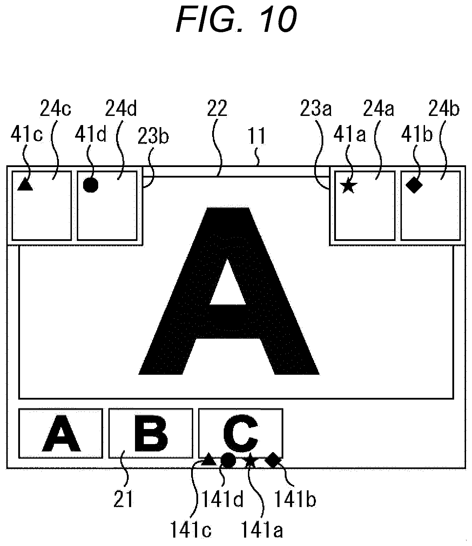

Furthermore, the correspondence is clearly displayed by respectively displaying the mark 41 (star mark 41a, diamond mark 41b, triangle mark 41c, circle mark 41d) displayed on the enlarged display unit 31 in the sub display unit 12 in the small frame 24. However, as illustrated in Fig. 10, marks 141 similar to the marks 41 (star mark 141a, diamond mark 141b, triangle mark 141c, and circle mark 141d) may be displayed as overlapping with or next to the thumbnail of the content in the list 21 of the contents. Note that, not only marks but also symbols, numbers, character strings, and the like may be used to clearly indicate the correspondence.

For example, as illustrated in Fig. 10, in a case where the content is displayed on any one of the enlarged display units 31 corresponding to the displayed small frames 24, a mark 141 (star mark 141a, diamond mark 141b, triangle mark 141c, and circle mark 141d) same as the mark 41 (star mark 41a, diamond mark 41b, triangle mark 41c, circle mark 41d) indicating each small frame 24 is displayed to indicate a place where the content is displayed.

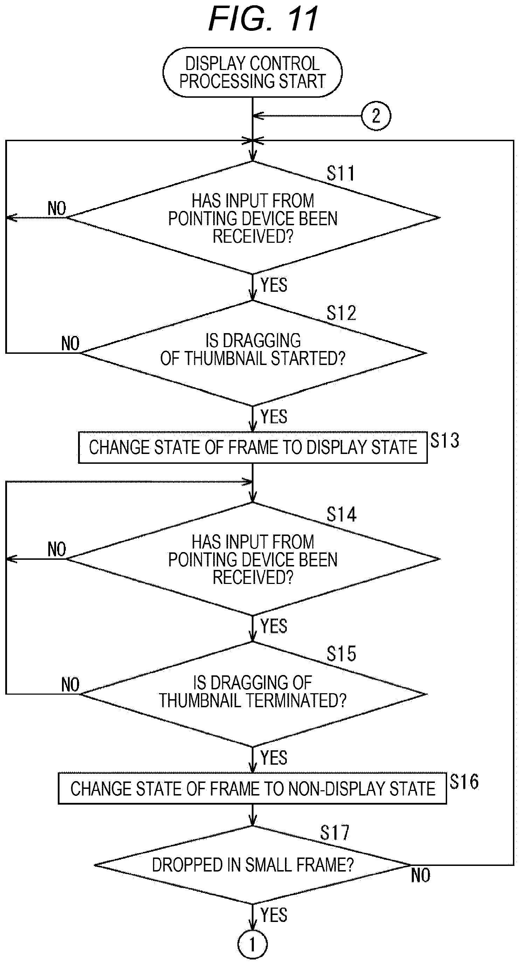

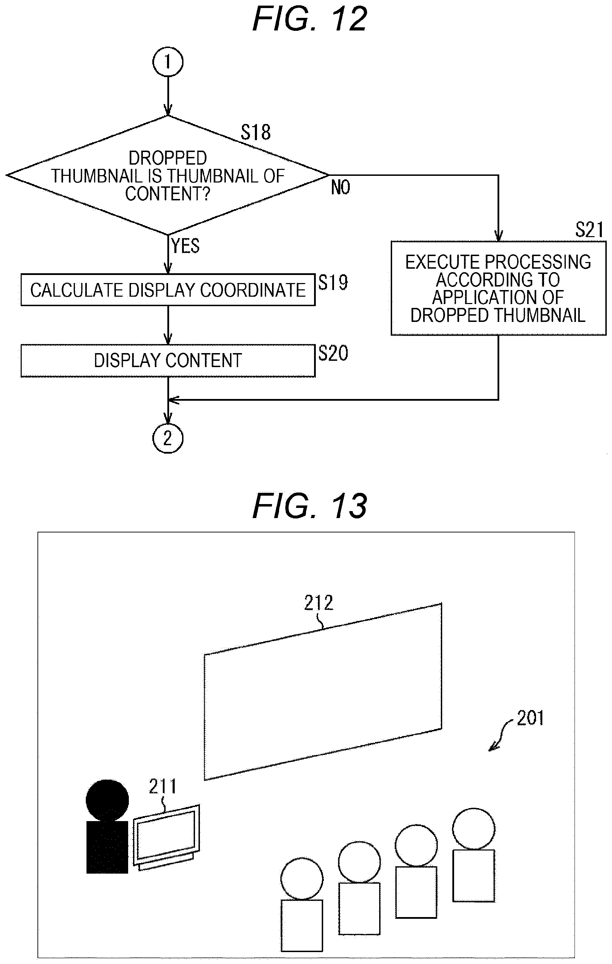

Next, display control processing in a case of the examples in Figs. 4 and 9 will be described with reference to flowcharts in Figs. 11 and 12.

An operator drags and drops a thumbnail of content or an application (hereinafter, simply referred to as thumbnail in a case where it is not necessary to distinguish content and application from each other) by using an arbitrary pointing device 81. The pointing position input unit 82 waits until receiving the position input from the pointing device 81 in step S11 in Fig. 11. When receiving the position input from the pointing device 81, the pointing position input unit 82 determines that the position input from the pointing device 81 has been received in step S11, and the procedure proceeds to step S12.

In step S12, the pointing position input unit 82 determines whether or not dragging of the thumbnail is started. In a case where it is determined in step S12 that dragging of the thumbnail has not been started, the procedure returns to step S11, and the subsequent processing is repeated.

In a case where it is determined in step S12 that dragging of the thumbnail has been started, the procedure proceeds to step S13. The display controller 85 changes a state of the frame 23 to a display state. With this operation, as illustrated on the right side of Fig. 4, the frame 23 is displayed on the main display unit 11.

In step S14, the pointing position input unit 82 waits until receiving the position input from the pointing device 81. When receiving the position input from the pointing device 81, the pointing position input unit 82 determines that the position input from the pointing device 81 has been received in step S14, and the procedure proceeds to step S15.

In step S15, the pointing position input unit 82 determines whether or not dragging of the thumbnail is terminated. In a case where it is determined in step S15 that dragging of the thumbnail has not been terminated, the procedure returns to step S14, and the subsequent processing is repeated.

In a case where it is determined in step S15 that dragging of the thumbnail has been terminated, the procedure proceeds to step S16. The display controller 85 changes the state of the frame 23 to a non-display state. With this operation, as illustrated on the left side in Fig. 4, the display of the frame 23 disappears from the main display unit 11.

In step S17, the pointing coordinate calculation unit 83 obtains coordinates of the position where dragging is terminated and determines whether or not the thumbnail is dropped in the small frame 24a or 24b. In a case where it is determined in step S17 that the thumbnail has not been dropped in the small frame 24a or 24b, the procedure returns to step S11, and the subsequent processing is repeated.

In a case where it is determined in step S17 that the thumbnail has been dropped in the small frame 24a or 24b, the procedure proceeds to step S18 in Fig. 12. In step S18, the pointing coordinate calculation unit 83 determines whether or not the dropped thumbnail is a thumbnail of content on the basis of the coordinates of the position where dragging is started.

In a case where the display position calculation unit 84 determines in step S18 that the dropped thumbnail is the thumbnail of the content, the procedure proceeds to step S19. In step S19, the display position calculation unit 84 determines a frame for enlarged display of a display target and calculates the display position of the content stored in the storage unit 68.

In step S20, the display controller 85 displays the content at the content display position from the display position calculation unit 84. For example, in the example in Fig. 1, the thumbnail of the content A is dropped so as to display the content A on the enlarged display unit 22 of the main display unit 11. On the other hand, the thumbnail of the content C is dropped so as to display the content C on the enlarged display unit 31a of the sub display unit 12.

In a case where the display position calculation unit 84 determines in step S18 that the dropped thumbnail is not the thumbnail of the content and is a thumbnail of an application (for example, thumbnail of application for content control in Fig. 9 (icon for content control 121)), the procedure proceeds to step S21. In step S21, the display controller 85 executes processing according to the application of the dropped thumbnail (icon for content control) 121. That is, in a case where the icon for content control 121 in Fig. 9 is dropped, the application for content control is activated, and the panel for control 131 is displayed on the main display unit 11 as indicated on the right side in Fig. 9.

As described above, the above display control processing is executed by the functional blocks in Fig. 3.

### <2. Second Embodiment (System Example)>

Although it can be considered that the above technology is applied to various ranges, educational use, medical use, and conference use are mentioned as examples to which the technology is applied in the following description.

Next, an application example to educational use will be described with reference to Fig. 13. Fig. 13 is a diagram of an outline of a classroom where a lecture is conducted.

In an education system 201 illustrated in an example in Fig. 13, a touch panel display 211 that is a display unit to be operated is provided at the hand of a teacher, and a screen 212 that is a display unit not to be operated is provided in a front part of the classroom. The teacher conducts class by using content displayed on the touch panel display 211 as necessary. The program described above is used for display, and the teacher performs dragging and dropping within a display range of the touch panel display 211 as necessary to switch the content to be displayed on the screen 212.

Generally, in a case where the touch panel display is used, the dragged target cannot go out from the screen. However, by applying the present technology, display can be made as if the target is dropped in a region outside the touch panel display, and the above operation can be performed.

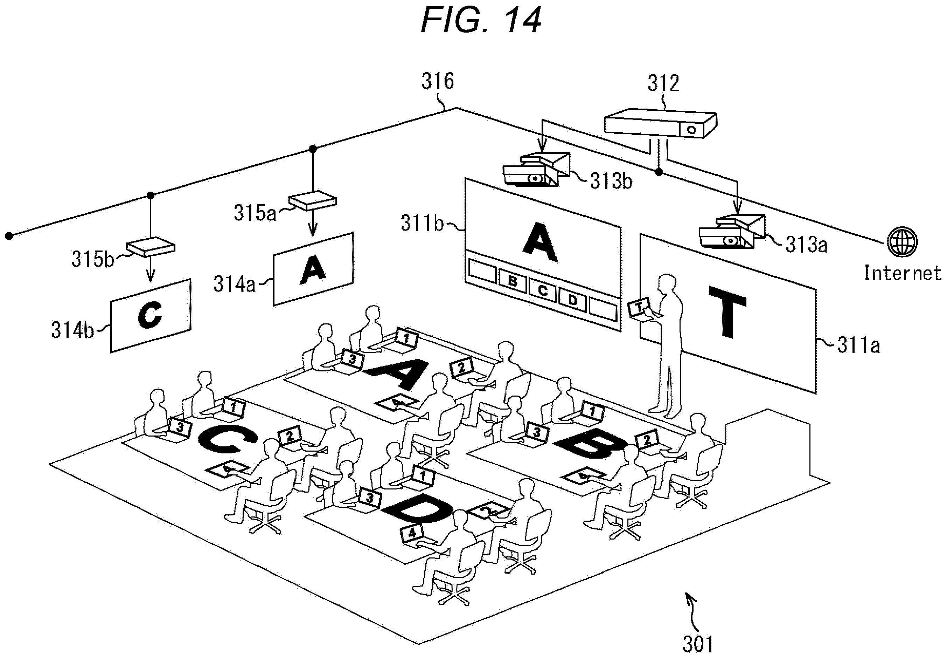

Next, another application example to the educational use will be described with reference to Fig. 14. Fig. 14 is a diagram of an outline of a classroom where a lecture using a method referred to as active learning is conducted.

In an active learning system 301 illustrated in an example in Fig. 14, a screen 311a that is a display unit to be operated is provided in a front part of the classroom, an output from a computer 312 is displayed on the screen 311a by a projector 313a, and the teacher mainly conducts class by using content displayed on the screen 311a.

Students are divided into a plurality of groups of several students, and sit around desks referred to as pods. Each of pods A to D includes displays for display 314a to 314d and computers 315a to 315d for making displays on the displays 314a to 314d, and the students can work for each group by using the displays and the computers. Furthermore, the computers 315a to 315d are connected to each other via a network 316. In addition, displays on the screen 311a and the displays 314a to 314d are made by using the program described above.

Furthermore, in the active learning system 301, a screen 311b that displays an output from the computer 312 by a projector 313b is arranged, and mirroring of contents can be performed between the screen 311b and the displays 314a to 314d in the respective pods. Mirroring indicates to display content displayed on a display unit of one terminal on a display unit of other terminal. At this time, from the terminal which displays an original display, content to be displayed on the display unit of the other terminal and a terminal to be a display destination can be arbitrarily selected. At the time of this selection, the present technology can be applied. A small frame 24 corresponding to a candidate of the terminal to be the display destination is displayed, and a target content is dragged and dropped in the small frame 24 so as to realize mirroring of the content.

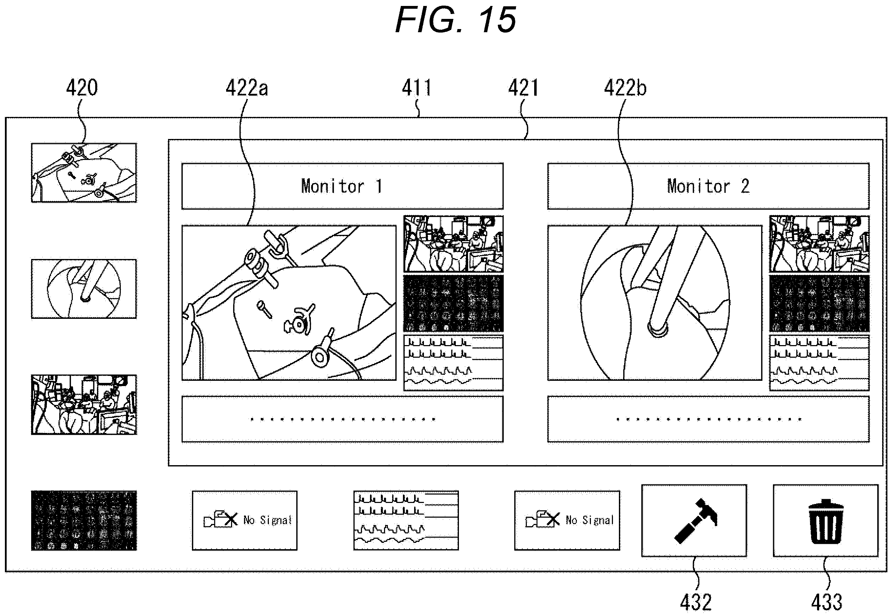

Next, a system example for medical use will be described with reference to Fig. 15.

An example in Fig. 15 is a diagram of an exemplary display of an operation screen 411 on a centralized operation panel provided in an operating room in a surgical system.

Fig. 15 illustrates an operation screen corresponding to a case where two display devices are provided in the operating room system as output destination devices as an example. Referring to Fig. 15, a source selection region 420 and a preview region 421 are provided in the operation screen 411.

In the source selection region 420, a source device included in the operating room system and a thumbnail screen indicating display information of the source device are displayed in association with each other. Furthermore, here, not only the thumbnail screens but also a control icon (thumbnail of control application) 432 and an icon for terminating display (thumbnail of application for terminating display) 433 are displayed. A user can select the display information to be displayed in the preview region 421 from among the source devices displayed in the source selection region 420.

In the preview region 421, previews of screens of the two display devices (Monitor 1 and Monitor 2) that are output destination devices are displayed. In the illustrated example, four images are PinP-displayed on a single display device. The four images correspond to the display information transmitted from the source device selected in the source selection region 420. One of the four images is displayed relatively large as a main image, and other three images are displayed relatively small as sub images. The user appropriately selects a region from among the regions where the four images are displayed to switch the main image and the sub images.

When each piece of display information to be displayed in the preview region 421 is selected from the source selection region 420, the present technology can be applied. As assuming that the source selection region 420 be the list 21 of the contents in Fig. 1, the preview region 421 be the frame 23, and each thumbnail 422 displayed in the preview region 421 be the small frame 24, a display target is switched by dragging and dropping. Furthermore, by dragging and dropping the control icon 432 in the preview region 421, a panel for controlling a target content (for example, panel 5201 to be described later) can be displayed.

As the pointing device, a non-contact type pointing device required in the medical field may be used. Since a non-contact pointing device often has a narrow operable region, as described above with reference to Fig. 6, it is considered to improve operability by displaying the small frame 24 near the list 21 of the contents. In this case, since the small frame 24 and the preview region 421 corresponding to the small frame 24 are displayed in the same operation screen 411, an animation in which the preview region 421 moves closer to the source selection region 420 and the like can be used at the time of displaying the small frame 24 for easy understanding of the correspondence.

Note that, as a conference use, an example of a conference system in which the sub display unit 12 in Fig. 1 is arranged in a remote place is mentioned.

Furthermore, a video transmitted to a screen of the other end in a video conference can be selected by using the present technology. In this case, the display arranged in the remote place have the function of the main display unit 11 so that a video can be transmitted from the remote place side.

As described above, according to the present technology, in a system including a plurality of display units, an operation with respect to a display unit different from a display unit to be operated can be performed. In other words, according to the present technology, all displayed contents can be operated by performing operations on only one display unit and the operation is to drag and drop the content from the list of the contents so that it is possible to extensively and intuitively perform an operation according to an operation only in a limited range.

In particular, in a case where a touch panel is used as an operation apparatus, dragging to the outside of the touch panel cannot be made. However, content can be virtually dropped to the outside of the display unit.

Furthermore, in a case where the non-contact type pointing device is used, the operable range is narrow. Therefore, the operation can be performed by dragging and dropping in a limited narrow range.

In addition, even in a case where the target display unit is arranged at a remote place, the content displayed on the display unit can be operated by dragging and dropping the content.

### <3. Application Example>

The technology according to the present disclosure can be applied to various products. For example, the technology according to the present disclosure may be applied to the operating room system.

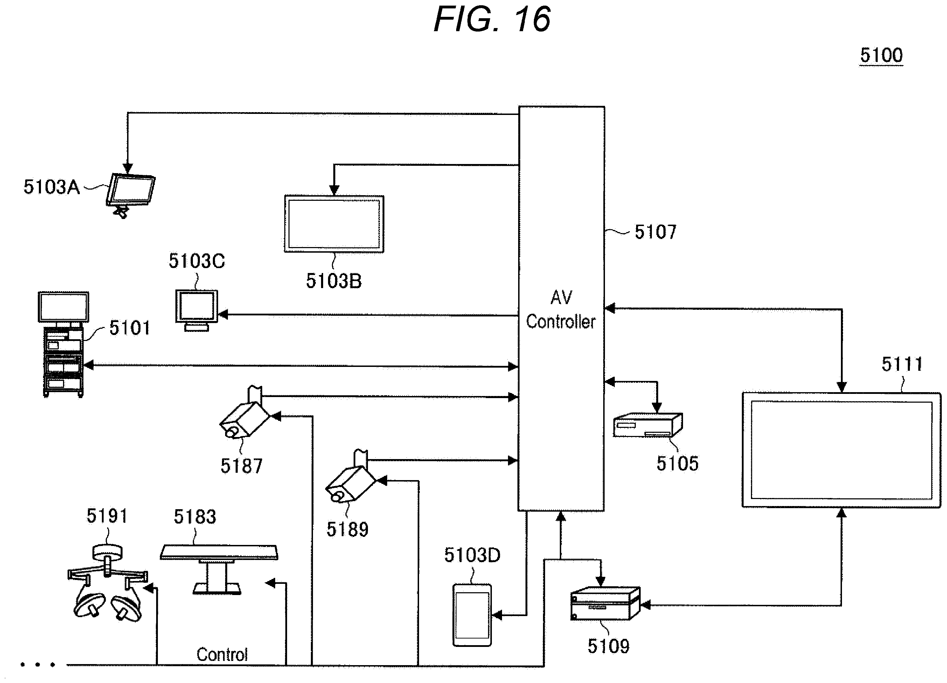

Fig. 16 is a schematic diagram of an overall configuration of an operating room system 5100 to which the technology according to the present disclosure may be applied. Referring to Fig. 16, the operating room system 5100 is configured by connecting a device group provided in an operating room so as to be able to cooperate with each other via an audio-visual controller (AV controller) 5107 and an operating room control device 5109.

Various devices may be provided in the operating room. As examples, Fig. 16 illustrates a device group 5101 for endoscopic surgery, a ceiling camera 5187 that is provided on a ceiling of the operating room and images hands of an operator, an operating site camera 5189 that is provided on the ceiling of the operating room and images a state of an entire operating room, a plurality of display devices 5103A to 5103D, a recorder 5105, a patient bed 5183, and an illumination 5191.

Here, among these devices, the device group 5101 belongs to an endoscopic surgical system 5113 as described later, and includes an endoscope, a display device that displays an image imaged by the endoscope, and the like. Each device belonging to the endoscopic surgical system 5113 is referred to as a medical device. Meanwhile, the display devices 5103A to 5103D, the recorder 5105, the patient bed 5183, and the illumination 5191 are installed in, for example, the operating room, separately from the endoscopic surgical system 5113. Each device which does not belong to the endoscopic surgical system 5113 is referred to as a non-medical device. The AV controller 5107 and/or the operating room control device 5109 cooperatively control operations of the medical devices and the non-medical devices.

The AV controller 5107 comprehensively controls processing related to image display of the medical devices and the non-medical devices. Specifically, among the devices included in the operating room system 5100, the device group 5101, the ceiling camera 5187, and the operating site camera 5189 may be a device (referred to as source device below) having a function for transmitting information to be displayed during surgery (referred to as display information below). Furthermore, the display devices 5103A to 5103D may be a device to which the display information is output (referred to as output destination device below). Furthermore, the recorder 5105 may be a device corresponding to both the source device and the output destination device. The AV controller 5107 has a function for controlling operations of the source device and the output destination device, obtaining the display information from the source device, transmitting the display information to the output destination device, and making the output destination device display or record the display information. Note that the display information is various images imaged during the surgery, various information related to the surgery (for example, body information of patient, past examination results, information about surgery method, and the like), and the like.

Specifically, the device group 5101 may transmit information regarding an image of an operation site in body cavity of the patient imaged by the endoscope to the AV controller 5107 as the display information. Furthermore, the ceiling camera 5187 may transmit information regarding an image of the hands of the operator imaged by the ceiling camera 5187 as the display information. Furthermore, the operating site camera 5189 may transmit information regarding an image indicating the state of the entire operating room imaged by the operating site camera 5189 as the display information. Note that, in a case where the other device having an imaging function exists in the operating room system 5100, the AV controller 5107 may obtain information regarding an image imaged by the other device from the other device as the display information.

Alternatively, for example, in the recorder 5105, information regarding these images imaged in the past is recorded by the AV controller 5107. The AV controller 5107 can obtain the information regarding the images imaged in the past from the recorder 5105 as the display information. Note that various information regarding the surgery may be recorded in the recorder 5105 in advance.

The AV controller 5107 makes at least one of the display devices 5103A to 5103D that are output destination devices display the obtained display information (in other words, images imaged during surgery and various information regarding surgery). In the illustrated example, the display device 5103A is a display device provided as being suspended from the ceiling of the operating room, the display device 5103B is a display device provided on a wall of the operating room, the display device 5103C is a display device provided on a desk in the operating room, and the display device 5103D is a mobile device having a display function (for example, tablet Personal Computer (PC)).

Furthermore, although not illustrated in Fig. 16, devices outside the operating room may be included in the operating room system 5100. The device outside the operating room may be, for example, a server connected to a network constructed inside and outside a hospital, a PC used by a medical staff, a projector provided in a conference room in the hospital, and the like. In a case where such an external device is provided outside the hospital, the AV controller 5107 can make a display device in other hospital display the display information via a television conference system and the like for remote medical treatment.

The operating room control device 5109 comprehensively controls processing other than the processing regarding the image display by the non-medical devices. For example, the operating room control device 5109 controls driving of the patient bed 5183, the ceiling camera 5187, the operating site camera 5189, and the illumination 5191.

A centralized operation panel 5111 is provided in the operating room system 5100, and the user can issue an instruction regarding image display to the AV controller 5107 via the centralized operation panel 5111 and issue an instruction regarding the operation of the non-medical device to the operating room control device 5109 via the centralized operation panel 5111. The centralized operation panel 5111 is configured by providing a touch panel on a display surface of the display device.

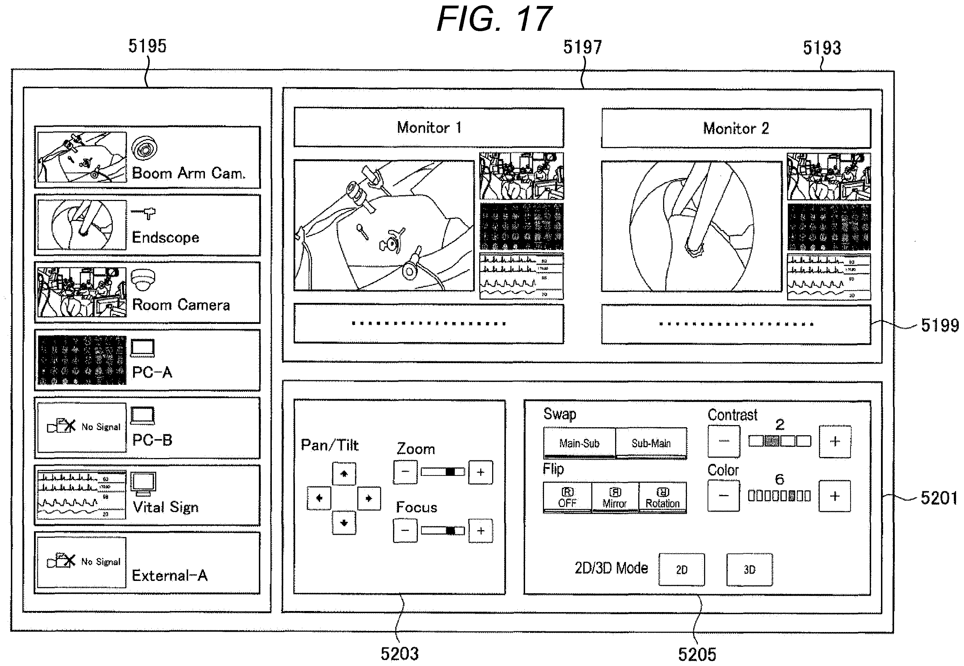

Fig. 17 is a diagram of an exemplary display of an operation screen on the centralized operation panel 5111. Fig. 17 illustrates an operation screen corresponding to a case where two display devices are provided in the operating room system 5100 as output destination devices as an example. Referring to Fig. 17, a source selection region 5195, a preview region 5197, and a control region 5201 are provided in an operation screen 5193.

In the source selection region 5195, a source device included in the operating room system 5100 and a thumbnail screen indicating display information of the source device are displayed in association with each other. A user can select the display information to be displayed on the display device from among the source devices displayed in the source selection region 5195.

In the preview region 5197, previews of screens of the two display devices (Monitor 1 and Monitor 2) that are output destination devices are displayed. In the illustrated example, four images are PinP-displayed on a single display device. The four images correspond to the display information transmitted from the source device selected in the source selection region 5195. One of the four images is displayed relatively large as a main image, and other three images are displayed relatively small as sub images. The user appropriately selects a region from among the regions where the four images are displayed to switch the main image and the sub images. Furthermore, a status display region 5199 is provided in a lower portion of the region where the four images are displayed, and a status regarding surgery (for example, elapsed time of surgery, body information of patient, and the like) may be appropriately displayed in the region.

In the control region 5201, a source operation region 5203 where a Graphical User Interface (GUI) component used to perform an operation relative to the source device is displayed and an output destination operation region 5205 where a GUI component used to perform an operation relative to the output destination device is displayed are provided. In the illustrated example, in the source operation region 5203, GUI components used to perform various operations (panning, tilting, and zooming) relative to a camera of the source device having the imaging function are provided. The user appropriately selects the GUI component so as to operate the movement of the camera of the source device. Note that, although not illustrated, in a case where the source device selected in the source selection region 5195 is a recorder (in other words, image recorded in recorder in the past is displayed in preview region 5197), GUI components used to perform operations such as reproduction, stop, rewind, fast-forward of the image, and the like may be provided in the source operation region 5203.

Furthermore, in the output destination operation region 5205, GUI components used to perform various operations regarding display on the display device which is the output destination device (swap, flip, color adjustment, contrast adjustment, and switching between 2D display and 3D display) are provided. The user appropriately selects these GUI components so as to operate the display on the display device.

Note that the operation screen displayed on the centralized operation panel 5111 is not limited to the illustrated example. The user may be capable of inputting operations to each device, which is included in the operating room system 5100 and may be controlled by the AV controller 5107 and the operating room control device 5109, via the centralized operation panel 5111.

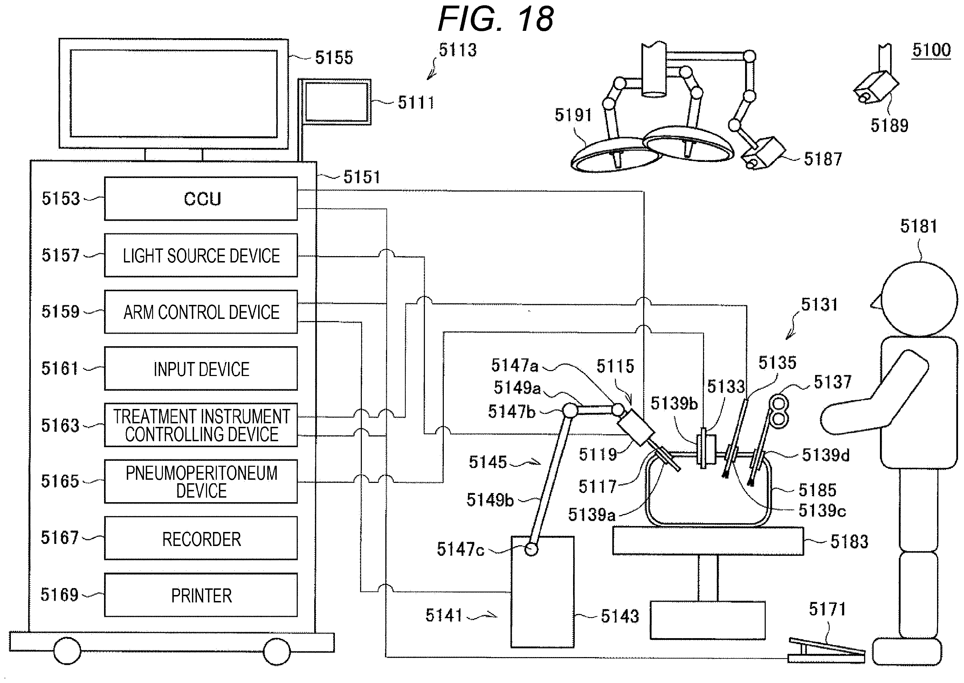

Fig. 18 is a diagram of an example of a state of surgery to which the operating room system described above is applied. The ceiling camera 5187 and the operating site camera 5189 are provided on the ceiling of the operating room and can image hands of an operator (surgeon) 5181 who performs treatment on an affected part of a patient 5185 on the patient bed 5183 and a state of the entire operating room. The ceiling camera 5187 and the operating site camera 5189 may have a magnification adjustment function, a focal distance adjustment function, an imaging direction adjustment function, and the like. The illumination 5191 is provided on the ceiling of the operating room and illuminates at least the hands of the operator 5181. The illumination 5191 may be capable of appropriately adjusting an irradiation light amount, a wavelength (color) of irradiation light, an irradiation direction of light, and the like.

As illustrated in Fig. 16, the endoscopic surgical system 5113, the patient bed 5183, the ceiling camera 5187, the operating site camera 5189, and the illumination 5191 are mutually connected so as to cooperate with each other via the AV controller 5107 and the operating room control device 5109 (not illustrated in Fig. 18). In the operating room, the centralized operation panel 5111 is provided, and as described above, the user can appropriately operate these devices existing in the operating room via the centralized operation panel 5111.

Hereinafter a configuration of the endoscopic surgical system 5113 will be described in detail. As illustrated in Fig. 18, the endoscopic surgical system 5113 includes an endoscope 5115, other surgical tools 5131, a supporting arm device 5141 for supporting the endoscope 5115, and a cart 5151 on which various devices for endoscopic surgery are mounted.

In endoscopic surgery, instead of cutting an abdominal wall and opening an abdomen, the abdominal wall is punctured by a plurality of cylindrical puncture devices referred to as trocars 5139a to 5139d. Then, through the trocars 5139a to 5139d, a lens barrel 5117 of the endoscope 5115 and the other surgical tools 5131 are inserted into the body cavity of the patient 5185. In the illustrated example, as the other surgical tools 5131, a pneumoperitoneum tube 5133, an energy treatment instrument 5135, and a forceps 5137 are inserted into the body cavity of the patient 5185. Furthermore, the energy treatment instrument 5135 is a treatment instrument which performs dissection and detachment of tissue or sealing of a blood vessel by high-frequency current or ultrasonic vibration. However, the illustrated surgical tools 5131 are only exemplary, and it is allowable to use various surgical tools used for general endoscopic surgery, for example, tweezers, a retractor, and the like as the surgical tools 5131.

An image of the operation site in the body cavity of the patient 5185 imaged by the endoscope 5115 is displayed on a display device 5155. While viewing the image of the operation site displayed on the display device 5155 in real time, the operator 5181 executes processing, such as removing an affected part, or the like, by using the energy treatment instrument 5135 and the forceps 5137. Note that, although not illustrated, the pneumoperitoneum tube 5133, the energy treatment instrument 5135, and the forceps 5137 are supported by the operator 5181, an assistant, or the like, during surgery.

### (Supporting Arm Device)

The supporting arm device 5141 includes an arm portion 5145 extending from a base portion 5143. In the illustrated example, the arm portion 5145 includes joint portions 5147a, 5147b, and 5147c and links 5149a and 5149b and is driven by control of an arm control device 5159. The arm portion 5145 supports the endoscope 5115 and controls the portion and the posture of the endoscope 5115. With this device, the endoscope 5115 may be stably fixed to a position.

### (Endoscope)

The endoscope 5115 includes the lens barrel 5117 of which a portion with a predetermined length from a front end is inserted into the body cavity of the patient 5185 and a camera head 5119 connected to a base end of the lens barrel 5117. In the illustrated example, the endoscope 5115 formed as a so-called rigid endoscope having a rigid lens barrel 5117 is illustrated. However, the endoscope 5115 may be formed as a so-called flexible endoscope having a flexible lens barrel 5117.

At the front end of the lens barrel 5117, an opening in which an objective lens is fitted is provided. A light source device 5157 is connected to the endoscope 5115, and light generated by the light source device 5157 is guided to the front end of the lens barrel by a light guide extending in the lens barrel 5117 and is irradiated to an object to be observed in the body cavity of the patient 5185 through the objective lens. Note that the endoscope 5115 may be a direct-view endoscope, an oblique-view endoscope, or a side-view endoscope.

An optical system and an imaging element are provided in the camera head 5119, and light reflected by the object to be observed (observation light) is collected by the optical system to the imaging element. The imaging element photoelectrically converts the observation light and generates an electric signal corresponding to the observation light, that is, an image signal corresponding to an observation image. The image signal is transmitted to a Camera Control Unit (CCU) 5153 as RAW data. Note that the camera head 5119 has a function for adjusting the magnification and the focal distance by appropriately driving the optical system of the camera head 5119.

Note that, for example, to realize stereoscopic viewing (3D display) or the like, a plurality of imaging elements may be provided in the camera head 5119. In this case, a plurality of relay optical systems is provided in the lens barrel 5117 so as to guide the observation light to each of the plurality of imaging elements.

### (Various Devices Mounted on Cart)

The CCU 5153 includes a Central Processing Unit (CPU), a Graphics Processing Unit (GPU), and the like and comprehensively controls the operations of the endoscope 5115 and the display device 5155. Specifically, the CCU 5153 executes various image processing to display an image based on an image signal, for example, developing processing (demosaic processing) and the like, on the image signal received from the camera head 5119. The CCU 5153 provides the image-processed image signal to the display device 5155. Furthermore, the CCU 5153 is connected to the AV controller 5107 illustrated in Fig. 16. The CCU 5153 provides the image-processed image signal also to the AV controller 5107. Furthermore, the CCU 5153 transmits a control signal to the camera head 5119 and controls driving of the camera head 5119. The control signal may include information regarding imaging conditions such as a magnification and a focal distance. The information regarding the imaging conditions may be input via an input device 5161 or may be input via the centralized operation panel 5111 described above.

The display device 5155 displays the image based on the image signal to which the image processing has been performed by the CCU 5153 under the control by the CCU 5153. In a case where the endoscope 5115 is compatible with high resolution imaging such as 4K (the number of horizontal pixels 3840 × the number of vertical pixels 2160) or 8K (the number of horizontal pixels 7680 × the number of vertical pixels 4320), for example, and/or in a case where the endoscope 5115 is compatible with 3D display, a display device which can achieve high resolution display and/or 3D display to cope with both cases may be used as the display device 5155. In a case where the display device 5155 is compatible with high resolution imaging such as 4K or 8K, more immersive feeling can be obtained by using a display device 5155 having a size equal to or larger than 55 inches. Furthermore, depending on the application, the plurality of display devices 5155 having different resolutions and different sizes may be provided.

The light source device 5157 includes a light source such as a Light Emitting Diode (LED), for example, and supplies irradiation light, at the time when an operation site is imaged, to the endoscope 5115.

The arm control device 5159 includes, for example, a processor such as a CPU and operates according to a predetermined program so as to control driving of the arm portion 5145 of the supporting arm device 5141 according to a predetermined control method.

The input device 5161 may be an input interface relative to the endoscopic surgical system 5113. A user can input various information and input instructions to the endoscopic surgical system 5113 via the input device 5161. For example, the user inputs various information regarding the surgery such as body information of the patient, an operative method, and the like via the input device 5161. Furthermore, for example, the user inputs an instruction to drive the arm portion 5145, an instruction to change the imaging conditions (kind of irradiation light, magnification, focal distance, and the like) by the endoscope 5115, an instruction to drive the energy treatment instrument 5135, and the like via the input device 5161.

The type of the input device 5161 is not limited, and the input device 5161 may be various known input devices. As the input device 5161, for example, a mouse, a keyboard, a touch panel, a switch, a foot switch 5171, a lever, and/or the like may be applied. In a case where a touch panel is used as the input device 5161, the touch panel may be provided on the display surface of the display device 5155.

Alternatively, the input device 5161 is a device worn by the user, for example, a glass-type wearable device, a Head Mounted Display (HMD), and the like, and various inputs are performed according to a gesture and a line of sight of the user detected by these devices. Furthermore, the input device 5161 includes a camera which can detect a motion of the user, and various inputs are performed according to the gesture and the line of sight of the user detected from a video imaged by the camera. In addition, the input device 5161 includes a microphone which can collect voice of the user, and various inputs are performed by using voice via the microphone. In this way, the input device 5161 is configured to be capable of inputting various information in a non-contact manner so that the user (for example, operator 5181) belonging to an especially clean area can operate devices belonging to an unclean area in a non-contact manner. Furthermore, since the user can operate the device without releasing his hand from the holding surgical tools, convenience of the user is improved.

A treatment instrument controlling device 5163 controls driving of the energy treatment instrument 5135 for cauterizing or dissecting of tissue or sealing a blood vessel, for example. To secure a field of view and an operation space of an operator by the endoscope 5115, a pneumoperitoneum device 5165 injects gas into the body cavity through the pneumoperitoneum tube 5133 to swell the body cavity of the patient 5185. A recorder 5167 is a device capable of recording various information regarding surgery. A printer 5169 is a device capable of printing various information regarding surgery in various formats such as a text, an image, a graph, and the like.

Hereinafter, particularly characteristic configuration of the endoscopic surgical system 5113 will be described in more detail.

### (Supporting Arm Device)

The supporting arm device 5141 includes the base portion 5143 that is a base and the arm portion 5145 extending from the base portion 5143. In the illustrated example, the arm portion 5145 includes the plurality of joint portions 5147a, 5147b, and 5147c and the plurality of links 5149a and 5149b coupled by the joint portion 5147b. However, for easy understanding, the simplified configuration of the arm portion 5145 is illustrated in Fig. 18. Actually, shapes, the number, and arrangement of the joint portions 5147a to 5147c and the links 5149a and 5149b, directions of rotation axes of the joint portions 5147a to 5147c, and the like may be appropriately set so that the arm portion 5145 has a desired degree of freedom. For example, the arm portion 5145 may be preferably configured to have degrees of freedom equal to or more than six degrees of freedom. With this configuration, since the endoscope 5115 can be freely moved in a movable range of the arm portion 5145, the lens barrel 5117 of the endoscope 5115 can be inserted into the body cavity of the patient 5185 in a desired direction.

Actuators are provided in the joint portions 5147a to 5147c, and the joint portions 5147a to 5147c can rotate around a predetermined rotation axis by driving of the actuators. By controlling the driving of the actuators by the arm control device 5159, a rotation angle of each of the joint portions 5147a to 5147c is controlled, and the driving of the arm portion 5145 is controlled. With this operation, the position and the posture of the endoscope 5115 can be controlled. At this time, the arm control device 5159 can control the driving of the arm portion 5145 by various known control methods such as force control or position control.

For example, the operator 5181 appropriately performs an operation input via the input device 5161 (including foot switch 5171) so as to appropriately control the driving of the arm portion 5145 by the arm control device 5159 according to the operation input, and the position and the posture of the endoscope 5115 may be controlled. With this control, after the endoscope 5115 provided at the front end of the arm portion 5145 is moved from a certain position to a certain position, the endoscope 5115 can be fixedly supported at the position after being moved. Note that the arm portion 5145 may be operated by a so-called master-slave method. In this case, the arm portion 5145 may be remotely controlled by the user via the input device 5161 provided at a place away from the operating room.

Furthermore, in a case where the force control is applied, the arm control device 5159 may perform so-called power assist control of receiving external force from the user and driving the actuator of each of the joint portions 5147a to 5147c so as to smoothly move the arm portion 5145 according to the external force. With this control, when the user moves the arm portion 5145 while directly having contact with the arm portion 5145, the arm portion 5145 can be moved with relatively weak force. Therefore, the endoscope 5115 can be more intuitively moved by a simpler operation, and the convenience of the user can be improved.

Here, in general, a doctor called an endoscopic technician has supported the endoscope 5115 in the endoscopic surgery. On the other hand, by using the supporting arm device 5141, the position of the endoscope 5115 can be more reliably fixed without manual operations. Therefore, the image of the operation site can be stably obtained, and surgery can be smoothly performed.

Note that the arm control device 5159 is not necessarily provided on the cart 5151. Furthermore, the arm control device 5159 is not necessarily a single device. For example, the arm control device 5159 may be provided in each of the joint portions 5147a to 5147c of the arm portion 5145 of the supporting arm device 5141, and the driving of the arm portion 5145 may be controlled by the plurality of arm control devices 5159 that performs in cooperation with each other.

### (Light Source Device)

The light source device 5157 supplies irradiation light used for imaging the operation site to the endoscope 5115. The light source device 5157 includes, for example, an LED, a laser light source or a white light source configured by a combination of the LED and the laser light source. At this time, in a case where the white light source is configured by a combination of RGB laser light sources, an output intensity and an output timing of each color (each wavelength) can be controlled with high accuracy. Therefore, the light source device 5157 can adjust a white balance of the imaged image. Furthermore, in this case, by irradiating the object to be observed with laser light from each of the RGB laser light sources in time division and controlling the driving of the imaging element of the camera head 5119 in synchronization with the irradiation timing, images respectively corresponding to the R, G, and B can be imaged in time division. According to this method, a color image can be obtained without providing a color filter in the imaging element.

Furthermore, the driving of the light source device 5157 may be controlled so as to change the intensity of output light for each predetermined time period. By controlling the driving of the imaging element of the camera head 5119 in synchronization with a timing of the change of the light intensity and obtaining the images in time division, and synthesizing the images, an image with a high dynamic range that does not have so-called blown-out highlights and blocked up shadows can be generated.

Furthermore, the light source device 5157 may be formed to be capable of supplying light in a predetermined wavelength band compatible with special light observation. In the special light observation, for example, by irradiating light in a narrower band than irradiation light (in other words, white light) at the time of normal observation using wavelength dependency of a body tissue to absorb light, so-called Narrow Band Imaging is performed, in which a predetermined tissue such as a blood vessel in a mucosal surface layer is imaged with high contrast. Alternatively, in the special light observation, fluorescence observation for obtaining an image with fluorescence generated by irradiating excitation light may be performed. In the fluorescence observation, the fluorescence from the body tissue may be observed by irradiating the body tissue with the excitation light (self-fluorescence observation), or it is possible to inject a reagent such as indocyanine green (ICG) in the body tissue and irradiate the body tissue with the excitation light corresponding to the fluorescence wavelength of the reagent to obtain a fluorescent image, for example. The light source device 5157 can supply narrow band light and/or excitation light compatible with such special light observation.

### (Camera Head and CCU)

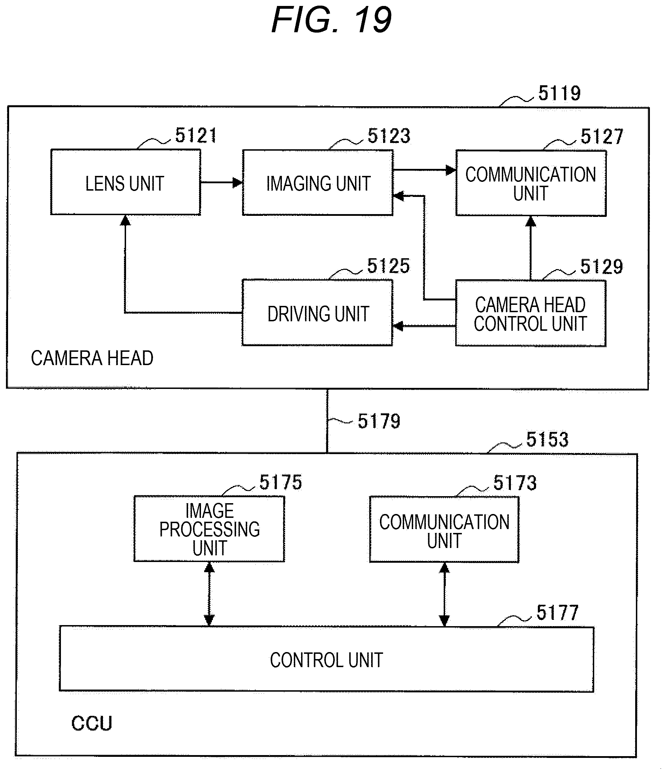

Referring to Fig. 19, functions of the camera head 5119 and the CCU 5153 of the endoscope 5115 will be described in more detail. Fig. 19 is a block diagram of an exemplary functional configuration of the camera head 5119 and the CCU 5153 illustrated in Fig. 18.

Referring to FIG. 19, the camera head 5119 includes a lens unit 5121, an imaging unit 5123, a driving unit 5125, a communication unit 5127, and a camera head control unit 5129 as functions of the camera head 5119. Furthermore, the CCU 5153 includes a communication unit 5173, an image processing unit 5175, and a control unit 5177 as functions of the CCU 5153. The camera head 5119 and the CCU 5153 are communicably and bidirectionally connected to each other by a transmission cable 5179.

First, the functional configuration of the camera head 5119 will be described. The lens unit 5121 is an optical system provided at a connecting portion with the lens barrel 5117. Observation light taken from the front end of the lens barrel 5117 is guided to the camera head 5119 and enters the lens unit 5121. The lens unit 5121 is formed by combining a plurality of lenses including zoom lenses and focus lenses. Optical characteristics of the lens unit 5121 are adjusted to collect the observation light on a light receiving surface of the imaging element of the imaging unit 5123. Furthermore, positions of the zoom lens and the focus lens on the optical axis can be moved to adjust a magnification and a focus of an imaged image.

The imaging unit 5123 includes the imaging element and is arranged at a subsequent stage of the lens unit 5121. The observation light which has passed through the lens unit 5121 is collected on the light receiving surface of the imaging element, and an image signal corresponding to an observation image is generated by photoelectric conversion. The image signal generated by the imaging unit 5123 is provided to the communication unit 5127.

The imaging element included in the imaging unit 5123 is, for example, a Complementary Metal Oxide Semiconductor (CMOS) type image sensor which has a Bayer arrangement and can perform color imaging. Note that, as the imaging element, an imaging element that can cope with imaging an image with a high resolution, for example, equal to or more than 4K may be used. Since the image of the operation site can be obtained with high resolution, the operator 5181 can recognize the state of the operation site in more detail, and the surgery can be more smoothly progressed.

Furthermore, the imaging element configuring the imaging unit 5123 includes a pair of imaging elements for respectively obtaining image signals for right and left eyes coping with the 3D display. With the 3D display, the operator 5181 can more accurately recognize the depth of living tissue in the operation site. Note that in a case where the imaging unit 5123 has a multi-plate type configuration, a plurality of lens units 5121 is provided in correspondence with the imaging elements.

Furthermore, the imaging unit 5123 is not necessarily provided in the camera head 5119. For example, the imaging unit 5123 may be provided just behind the objective lens in the lens barrel 5117.

The driving unit 5125 includes an actuator and moves the zoom lens and the focus lens of the lens unit 5121 by a predetermined distance along the optical axis under the control by the camera head control unit 5129. With this movement, the magnification and the focus of the image imaged by the imaging unit 5123 may be appropriately adjusted.

The communication unit 5127 includes a communication device for transmitting and receiving various information to/from the CCU 5153. The communication unit 5127 transmits the image signal obtained from the imaging unit 5123 to the CCU 5153 via the transmission cable 5179 as RAW data. At this time, to display the imaged image of the operation site with low latency, it is preferable that the image signal be transmitted by optical communication. This is because, since the operator 5181 performs surgery while observing the state of the affected part by using the imaged image at the time of surgery, it is required to display a moving image of the operation site in real time as possible for safer and more reliable surgery. In a case where the optical communication is performed, a photoelectric conversion module which converts an electric signal into an optical signal is provided in the communication unit 5127. After the image signal is converted into the optical signal by the photoelectric conversion module, the image signal is transmitted to the CCU 5153 via the transmission cable 5179.

Furthermore, the communication unit 5127 receives a control signal for controlling the driving of the camera head 5119 from the CCU 5153. The control signal includes, for example, information regarding the imaging conditions such as information specifying the frame rate of the imaged image, information specifying the exposure value at the time of imaging, and/or information specifying the magnification and the focus of the imaged image. The communication unit 5127 provides the received control signal to the camera head control unit 5129. Note that the control signal from the CCU 5153 may be transmitted by optical communication. In this case, a photoelectric conversion module which converts an optical signal into an electric signal is provided in the communication unit 5127, and after converted into an electric signal by the photoelectric conversion module, the control signal is provided to the camera head control unit 5129.

Note that the control unit 5177 of the CCU 5153 automatically sets the imaging conditions such as the frame rate, the exposure value, the magnification and the focus on the basis of the obtained image signal. That is, the endoscope 5115 has a so-called Auto Exposure (AE) function, an Auto Focus (AF) function, and an Auto White Balance (AWB) function.

The camera head control unit 5129 controls the driving of the camera head 5119 on the basis of the control signal from the CCU 5153 received via the communication unit 5127. For example, the camera head control unit 5129 controls the driving of the imaging element of the imaging unit 5123 on the basis of the information specifying the frame rate of the imaged image and/or the information specifying the exposure at the time of imaging. Furthermore, for example, the camera head control unit 5129 appropriately moves the zoom lens and the focus lens of the lens unit 5121 via the driving unit 5125 on the basis of the information specifying the magnification and the focus of the imaged image. The camera head control unit 5129 may further have a function for storing information for identifying the lens barrel 5117 and the camera head 5119.

Note that, by arranging the components such as the lens unit 5121, the imaging unit 5123, and the like in a sealed structure having high airtightness and waterproofness, the camera head 5119 can have resistance to autoclave sterilization.

Next, the functional configuration of the CCU 5153 will be described. The communication unit 5173 includes a communication device for transmitting and receiving various information to/from the camera head 5119. The communication unit 5173 receives the image signal transmitted from the camera head 5119 via the transmission cable 5179. At this time, as described above, the image signal may be preferably transmitted by optical communication. In this case, to be compatible with optical communication, a photoelectric conversion module which converts an optical signal into an electric signal is provided in the communication unit 5173. The communication unit 5173 provides the image signal converted into the electric signal to the image processing unit 5175.

Furthermore, the communication unit 5173 transmits the control signal to control the driving of the camera head 5119 to the camera head 5119. The control signal may be transmitted by optical communication.

The image processing unit 5175 performs various image processing on the image signal that is the RAW data transmitted from the camera head 5119. The image processing includes various known signal processing, for example, development processing, image quality enhancement processing (band emphasis processing, super-resolution processing, Noise Reduction (NR) processing, camera shake correction processing, and/or the like), enlargement processing (electronic zoom processing), and/or the like. Furthermore, the image processing unit 5175 executes detection processing on the image signal so as to achieve the AE, the AF, and the AWB.

The image processing unit 5175 includes a processor such as a CPU and a GPU, and the processor operates according to a predetermined program so that the image processing and the detection processing may be executed. Note that, in a case where the image processing unit 5175 includes a plurality of GPUs, the image processing unit 5175 appropriately divides information regarding the image signal and executes the image processing in parallel by using the plurality of GPUs.

The control unit 5177 performs various controls regarding imaging of the operation site by the endoscope 5115 and display of the imaged image. For example, the control unit 5177 generates the control signal to control the driving of the camera head 5119. At this time, in a case where the imaging conditions are input by the user, the control unit 5177 generates the control signal on the basis of the input by the user. Alternatively, in a case where the AE function, the AF function, and the AWB function are mounted on the endoscope 5115, the control unit 5177 appropriately calculates an optimum exposure value, focal distance, and white balance according to the result of the detection processing by the image processing unit 5175 and generates a control signal.

Furthermore, the control unit 5177 makes the display device 5155 display the image of the operation site on the basis of the image signal to which the image processing has been executed by the image processing unit 5175. In this case, the control unit 5177 recognizes various objects in the image of the operation site by using various image recognition technologies. For example, by detecting an edge shape, a color, and the like of the object included in the image of the operation site, the control unit 5177 can recognize surgical tools such as a forceps, a specific body portion, bleed, mist at the time of using the energy treatment instrument 5135, and the like. When making the display device 5155 display the image of the operation site, the control unit 5177 superimposes and displays various surgery assist information on the image of the operation site by using the recognition result. The surgery assist information is superimposed and displayed, and is presented to the operator 5181 so that the surgery can be more safely and reliably proceeded.

The transmission cable 5179 for connecting the camera head 5119 and the CCU 5153 is an electric signal cable compatible with electric signal communication, an optical fiber compatible with optical communication, or a composite cable thereof.

Here, in the illustrated example, wired communication has been performed by using the transmission cable 5179. However, the camera head 5119 and the CCU 5153 may wirelessly communicate with each other. In a case where the camera head 5119 and the CCU 5153 wirelessly communicate with each other, it is not necessary to provide the transmission cable 5179 in the operating room. Therefore, a state where movement of a medical staff in the operating room is prevented by the transmission cable 5179 may be resolved.

An example of the operating room system 5100 to which the technology according to the present disclosure may be applied has been described above. Note that, here, a case has been described where a medical system to which the operating room system 5100 is applied is the endoscopic surgical system 5113 as an example. However, the configuration of the operating room system 5100 is not limited to this example. For example, the operating room system 5100 may be applied to a flexible endoscope system for examination and a microscope surgical system instead of the endoscopic surgical system 5113.

The technology according to the present disclosure may be preferably applied to the operation screen of the centralized operation panel 5111 among the configurations described above. Specifically, the operation screen 411 in Fig. 15 can be used as the operation screen 5193. By applying the technology according to the present disclosure to the operation screen, in a system including a plurality of display units, an operation with respect to a display unit different from a display unit to be operated can be performed. In other words, as described with reference to Fig. 15, the operability can be improved.

### <4. Summary>

Note that the above series of processing can be executed by hardware and software. In a case where the series of the processing is executed by the software, a program included in the software is installed to a computer. Here, the computer includes a computer incorporated in dedicated hardware, a general personal computer which can perform various functions by installing various programs, and the like.

In the example in Fig. 3, the program executed by the computer (CPU 61) can be recorded and provided on the removable recording medium 71. The removable recording medium 71 is a package media and the like, for example, including a magnetic disk (including flexible disk), an optical disk (compact disc-read only memory (CD-ROM), digital versatile disc (DVD), and the like), an optical magnetic disk, a semiconductor memory, or the like. Furthermore, alternatively, the program can be provided via a wired or wireless transmission media such as a local area network, the Internet, and digital satellite broadcasting.

In the computer, the program can be installed to the storage unit 68 via the input/output interface 65 by mounting the removable recording medium 71 in the drive 70. Furthermore, the program can be received by the communication unit 69 via the wired or wireless transmission medium and installed to the storage unit 68. In addition, the program can be previously installed to the ROM 62 and the storage unit 68.

Note that, the program executed by the computer may be a program in which processing is performed along the order described herein in time series and a program in which the processing is performed in parallel or at a necessary stage when a call has been performed and the like.

Furthermore, in the present specification, a step for writing the program recorded in the recording media includes processing performed along the described order in time series and processing performed in parallel or independently even when the processing is not necessarily performed in time series.

Furthermore, in the present specification, the system indicates a whole device including a plurality of devices (apparatus).

For example, the present disclosure can have a configuration of cloud computing in which a single function is shared and jointly processed by a plurality of devices via a network.

Furthermore, the configuration described above as a single device (or processing unit) may be divided, and the divided parts may form a plurality of devices (or processing unit). Conversely, the configuration described above as a plurality of devices (or processing unit) may be collectively configured as a single device (or processing unit). Furthermore, a configuration other than the configuration described above may of course be added to the configuration of each device (or each processing unit). In addition, when the configuration and the operation as a whole system are substantially the same, a part of the configuration of a device (or processing unit) may be included in the configuration of the other device (or other processing unit). That is, the present technology is not limited to the above-mentioned embodiment, and various changes can be made without departing from the scope of the present technology.

A preferred embodiment of the present disclosure has been described in detail above with reference to the drawings. However, the present disclosure is not limited to the examples. It is obvious that a person who has normal knowledge in the technical field to which the present disclosure belongs can easily arrive at various variations and modifications in the scope of the technical ideas described in claims. It is understood that the variations and modifications naturally belong to the technical scope of the present disclosure.

Note that, the present technology can have the configuration below.
(1) An information processing apparatus including:
   a detection unit configured to detect a movement of a thumbnail indicating display target information to a predetermined region in a first display unit on the first display unit to be operated; and
   a display position calculation unit configured to calculate a display position of the display target information on any one of the first display unit or a second display unit that is not operated according to the predetermined region where the movement has been detected by the detection unit.
(2) The information processing apparatus according to (1), in which
   in a case where the movement of the thumbnail has been detected on a first predetermined region by the detection unit, the display position calculation unit calculates a display position of the display target information on the first display unit, and in a case where the movement of the thumbnail has been detected on a second predetermined region by the detection unit, the display position calculation unit calculates a display position of the display target information on the second display unit.
(3) The information processing apparatus according to (1) or (2), in which
   the detection unit detects the movement of the thumbnail according to a contact operation relative to the first display unit by using a pointing device.
(4) The information processing apparatus according to (1) or (2), in which
   the detection unit detects the movement of the thumbnail according to a non-contact operation by using a non-contact type pointing device.
(5) The information processing apparatus according to (1) or (2), further including:
   a display controller configured to make the first display unit display a frame surrounding the second predetermined region.
(6) The information processing apparatus according to (5), in which
   the detection unit detects a movement of the thumbnail made by dragging and dropping.
(7) The information processing apparatus according to (6), in which
   in a case where the detection unit has detected start of dragging, the display controller displays the frame, and in a case where the detection unit has detected dropping, the display controller prohibits the display of the frame.
(8) The information processing apparatus according to (5), in which
   in a case where the movement of the thumbnail has been detected on a second predetermined region by the detection unit, the display controller displays the frame, and in a case where the movement of the thumbnail has been detected outside the second predetermined region by the detection unit, the display controller prohibits the display of the frame.
(9) The information processing apparatus according to (5), in which
   the display controller arranges the second predetermined region on the first display unit.
(10) The information processing apparatus according to (9), in which
   the display controller arranges the second predetermined region according to physical arrangement of the second display unit.
(11) The information processing apparatus according to (9), in which
   the display controller controls display of a list of the thumbnails, and
   arranges the second predetermined region near the arrangement of the thumbnail selected from the list.
(12) The information processing apparatus according to (9), in which
   the display controller displays the second predetermined region as an icon according to the number of second display units.
(13) The information processing apparatus according to (12), in which
   in a case where proximity of the thumbnail has been detected near the icon by the detection unit, the display controller displays a frame at a position surrounding the second predetermined region.
(14) The information processing apparatus according to any one of (1) to (13), in which
   the display controller controls display of the list of the thumbnails, and
   displays a mark displayed on the second display unit where display target information is displayed at least one of on the second predetermined region corresponding to the second display unit or in vicinity of the thumbnail in the list indicating the display target information.
(15) The information processing apparatus according to any one of (1) to (14), in which
   the display target information is content or a content control application.
(16) The information processing apparatus according to (15), in which
   in a case where the display target information is the content control application, the display controller makes the first display unit display a screen of the content control application.
(17) The information processing apparatus according to any one of (1) to (16), in which
   the second display unit is arranged at a place away from the first display unit.
(18) The information processing apparatus according to any one of (1) to (17), in which
   the information processing apparatus is used for medical use, educational use, or conference use.
(19) An information processing method performed by an information processing apparatus, the information processing method including:
   detecting a movement of a thumbnail indicating display target information to a predetermined region in a first display unit on the first display unit to be operated; and
   calculating a display position of the display target information on any one of the first display unit or a second display unit that is not operated according to the predetermined region where the movement has been detected.
(20) A program causing a computer to function as:
   a detection unit that detects a movement of a thumbnail indicating display target information to a predetermined region in a first display unit on the first display unit to be operated; and
   a display position calculation unit that calculates a display position of the display target information on any one of the first display unit or a second display unit that is not operated according to the predetermined region where the movement has been detected by the detection unit.

### REFERENCE SIGNS LIST

- 11: Main display unit
- 12, 12a to 12d: Sub display unit
- 21: List of contents
- 22: Enlarged display unit
- 23: Frame
- 24, 24a to 24d: Small frame
- 31, 31a to 31d: Enlarged display unit
- 41: Mark
- 41a: Star mark
- 41b: Diamond mark
- 41c: Triangle mark
- 41d: Circle mark
- 51: Computer
- 61: CPU
- 63: RAM
- 66: input unit
- 67: Display unit
- 68: Storage unit
- 81: Pointing device
- 82: Pointing position input unit
- 83: Pointing coordinate calculation unit
- 84: Display position calculation unit
- 85, 86: Display controller
- 101: Room
- 111: Frame
- 112, 112a to 112d: Icon
- 121: Icon for content control
- 122: Icon for terminating content
- 131: Control panel
- 201: Education system
- 211: Touch panel display
- 212: Screen
- 301: Active learning system
- 311a, 311b: Screen
- 312: Computer
- 313a, 313b: Projector
- 314a to 314d: Display
- 315a to 315d: Computer
- 316: Network
- 411: Operation screen
- 420: Source selection region
- 421: Preview region
- 422: Thumbnail
- 432: Control icon
- 433: Icon for terminating display

## Claims

1. An information processing apparatus comprising:
a detection unit configured to detect a movement of a thumbnail indicating display target information to a predetermined region in a first display unit on the first display unit to be operated; and
a display position calculation unit configured to calculate a display position of the display target information on any one of the first display unit or a second display unit that is not operated according to the predetermined region where the movement has been detected by the detection unit.

2. The information processing apparatus according to claim 1, wherein
in a case where the movement of the thumbnail has been detected on a first predetermined region by the detection unit, the display position calculation unit calculates a display position of the display target information on the first display unit, and in a case where the movement of the thumbnail has been detected on a second predetermined region by the detection unit, the display position calculation unit calculates a display position of the display target information on the second display unit.

3. The information processing apparatus according to claim 2, wherein
the detection unit detects the movement of the thumbnail according to a contact operation relative to the first display unit by using a pointing device.

4. The information processing apparatus according to claim 2, wherein
the detection unit detects the movement of the thumbnail according to a non-contact operation by using a non-contact type pointing device.

5. The information processing apparatus according to claim 2, further comprising:
a display controller configured to make the first display unit display a frame surrounding the second predetermined region.

6. The information processing apparatus according to claim 5, wherein
the detection unit detects a movement of the thumbnail made by dragging and dropping.

7. The information processing apparatus according to claim 6, wherein
in a case where the detection unit has detected start of dragging, the display controller displays the frame, and in a case where the detection unit has detected dropping, the display controller prohibits the display of the frame.

8. The information processing apparatus according to claim 5, wherein
in a case where the movement of the thumbnail has been detected on a second predetermined region by the detection unit, the display controller displays the frame, and in a case where the movement of the thumbnail has been detected outside the second predetermined region by the detection unit, the display controller prohibits the display of the frame.

9. The information processing apparatus according to claim 5, wherein
the display controller arranges the second predetermined region on the first display unit.

10. The information processing apparatus according to claim 9, wherein
the display controller arranges the second predetermined region according to physical arrangement of the second display unit.

11. The information processing apparatus according to claim 9, wherein
the display controller controls display of a list of the thumbnails, and
arranges the second predetermined region near the arrangement of the thumbnail selected from the list.

12. The information processing apparatus according to claim 9, wherein
the display controller displays the second predetermined region as an icon according to a number of second display units.

13. The information processing apparatus according to claim 12, wherein
in a case where proximity of the thumbnail has been detected near the icon by the detection unit, the display controller displays a frame at a position surrounding the second predetermined region.

14. The information processing apparatus according to claim 5, wherein
the display controller controls display of the list of the thumbnails, and
displays a mark displayed on the second display unit where display target information is displayed at least one of on the second predetermined region corresponding to the second display unit or in vicinity of the thumbnail in the list indicating the display target information.

15. The information processing apparatus according to claim 5, wherein
the display target information includes content or a content control application.

16. The information processing apparatus according to claim 15, wherein
in a case where the display target information is the content control application, the display controller makes the first display unit display a screen of the content control application.

17. The information processing apparatus according to claim 2, wherein
the second display unit is arranged at a place away from the first display unit.

18. The information processing apparatus according to claim 2, wherein
the information processing apparatus is used for medical use, educational use, or conference use.

19. An information processing method performed by an information processing apparatus, the information processing method comprising:
detecting a movement of a thumbnail indicating display target information to a predetermined region in a first display unit on the first display unit to be operated; and
calculating a display position of the display target information on any one of the first display unit or a second display unit that is not operated according to the predetermined region where the movement has been detected.

20. A program causing a computer to function as:
a detection unit that detects a movement of a thumbnail indicating display target information to a predetermined region in a first display unit on the first display unit to be operated; and
a display position calculation unit that calculates a display position of the display target information on any one of the first display unit or a second display unit that is not operated according to the predetermined region where the movement has been detected by the detection unit.
